# EUROPEAN PATENT APPLICATION

(11) **EP 1 220 097 A2**
(43) Date of publication of application: **03.07.2002**
(21) Application number: 01310919.4
(22) Date of filing: 28.12.2001
(51) Int. Cl.: G06F 11/32, G06F 11/25

(54) **Apparatus management method, apparatus management system, and apparatus management program product**

(30) Priority: 28.12.2000 JP 2000401632
(71) Applicant: Toshiba Carrier Corporation, Tokyo 105-8001 (JP)
(72) Inventor: Hayashi, Hideaki, c/o Intellectual Property Div., Tokyo 105-8001 (JP); Noda, Kazutoshi, c/o Intellectual Property Div., Tokyo 105-8001 (JP)
(74) Representative: Midgley, Jonathan Lee

(57) **Abstract**

An apparatus management method comprising: prompting the input of category information for classifying the idle situations of idle apparatuses; prompting the input of idleness information for specifying the idle situations of said idle apparatuses; and storing said idleness information in a memory device (13) in which the idleness information is related to said category information.

## Description

This invention relates to an apparatus management method, an apparatus management system, and an apparatus management program product which improve the quality of an apparatus and its productivity.

To control the quality and productivity of a semiconductor manufacturing apparatus for manufacturing semiconductor devices, the failure of, maintenance of, and remodeling history of the apparatus, the daily inspection items of the apparatus, and others have been written on sheets of paper. As the need arises, the necessary sheets of paper have been taken out and the apparatus has been managed by reference to the sheets.

As semiconductor devices have become much smaller and more dense, manufacturing apparatuses have become more sophisticated and complicated. As a result, the conditions for managing the manufacturing apparatus have become complex. Thus, managing the apparatus has required a high-level knowledge.

When a trouble, such as a failure, occurred in the apparatus, the dependence on the maker was high when it came to dealing with the trouble, which caused problems of an increase in the repair costs and in the recovery time and of a decrease in the productivity of the apparatus.

From the viewpoints of yield control and a guarantee of quality, managing the state of the apparatus has been regarded as important.

In view of what happens on the shop-floor where a plurality of apparatuses are always in operation, however, the actual condition has exceeded the range that can be managed on the basis of what has been written on the sheets of paper and the operator's memory. Even if the information has been written on sheets of paper, it takes a long time to reach the necessary pieces of information because of an increase in the number of installed apparatuses or the like, with the result that the management of the apparatuses depends largely on the operator's memory.

According to an aspect of the present invention, there is provided an apparatus management method comprising: prompting the input of category information for classifying the idle situations of idle apparatuses; prompting the input of idleness information for specifying the idle situations of the idle apparatuses; and storing the idleness information in a memory device in which the idleness information is related to the category information.

Furthermore, according to another aspect of the present invention, there is provided an apparatus management method comprising: prompting the input of at least one of category information for classifying the idle situations of idle apparatuses and idleness information of the idle apparatuses; extracting related information associated with inputted information from a memory device in which the category information for classifying the idle situations of the idle apparatuses and the idleness information of the idle apparatuses is stored in advance; and displaying the related information.

In addition, according to still another aspect of the present invention, there is provided an apparatus management method comprising: displaying an inspection item display screen including the inspection items of an apparatus to prompt the input of inspection situation values for determining the inspection situation of each inspection item, the inspection situation specified in values; storing inputted inspection situation values in a memory device; making a statistical analysis on the basis of the inspection situation values; and displaying the result of the statistical analysis.

Moreover, according to still another aspect of the present invention, there is provided an apparatus management system which realizes the above apparatus management methods.

Furthermore, according to still another aspect of the present invention, there is provided an apparatus management program product which assigns a command to manage an apparatus to a computer system which realizes the above apparatus management methods.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a network diagram showing the overall configuration of an apparatus management system according to a first embodiment of the present invention;
FIG. 2 shows the overall configuration of a server according to the first embodiment;
FIG. 3 is a sequence diagram for an idle situation registering method related to the first embodiment;
FIG. 4 shows an example of an idle situation registering screen when failure history is selected according to the first embodiment;
FIG. 5 is a sequence diagram for an idle situation retrieving method related to the first embodiment;
FIG. 6 shows an example of an idle situation retrieval screen when failure history is selected according to the first embodiment;
FIGS. 7A to 7D show examples of a result-of-analysis display screen according to the first embodiment;
FIG. 8 is a sequence diagram for an apparatus inspection data registering method related to the first embodiment;
FIG. 9 shows an example of an inspection schedule registering screen according to a second embodiment of the present invention;
FIG. 10 shows an example of an inspection schedule display screen related to the second embodiment; and
FIG. 11 shows an example of relational database structure according a third embodiment of the present invention.

Hereinafter, referring to the accompanying drawings, embodiments of the present invention will be explained.

### (First Embodiment)

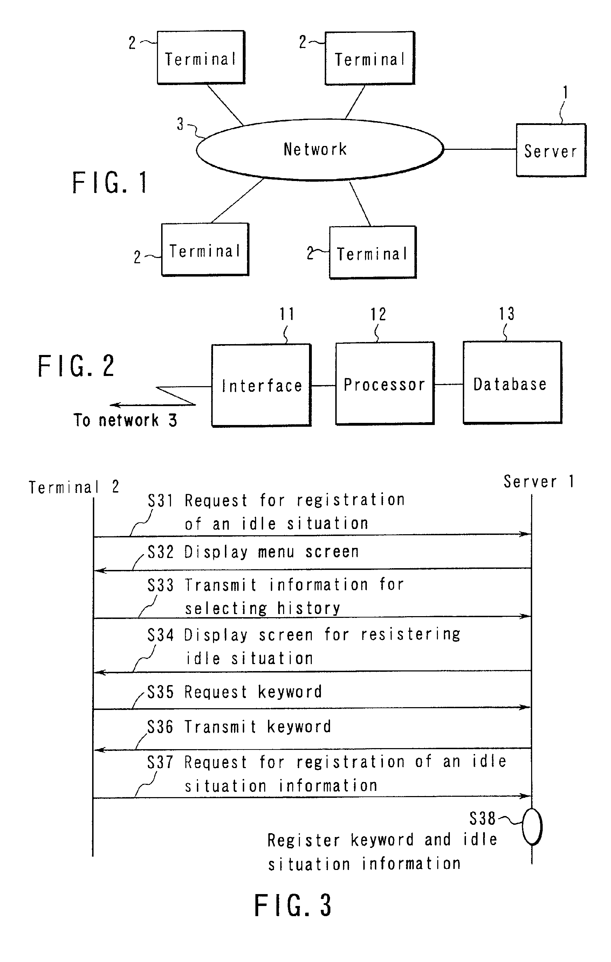

FIG. 1 is a network diagram showing the overall configuration of an apparatus management system according to a first embodiment of the present invention. As shown in FIG. 1, a server 1 and a plurality of terminals 2 are connected to a network 3.

FIG. 2 is a diagram showing the overall configuration of the server 1 related to the first embodiment. As shown in FIG. 2, the server 1 comprises an interface 11 which controls the transmission and reception of data to and from the network 3, a processor 12 which is connected to the interface 11 and executes various apparatus managing processes, and a database 13 which is connected to the processor 12 and stores various items of data. The database 13 stores not only various items of apparatus management data but also a processing program to be executed by the processor 12. The processor 12 reads out the processing program as needed and executes a managing process.

The database 13 has a relational database structure. Therefore, data items related to each other are specified in table structure form and have a structure that determines the relationship between the table structures. The individual table structures are related to each other according to predetermined relational rules. The predetermined relational rules are the rules that relate pieces of information belonging to different level of hierarchy, when the category information explained later is made hierarchic.

Next, an idle situation registering method in the first embodiment will be explained by reference to a sequence diagram in FIG. 3. In the embodiments below, unless otherwise specified, it is assumed that the transmission and reception of data between the server 1 and terminal 2 are performed via the network 3.

As shown in FIG. 3, the terminal 2 makes a connection request to the server 1 (s31). The terminal 2 is prompted to input its ID number and password as the condition for writing data into the database 13 of the server 1. After inputting its ID number and password, the terminal 2 is permitted to write data into the server 1 (s32). When permitted to write data, the terminal 2 display a menu screen.

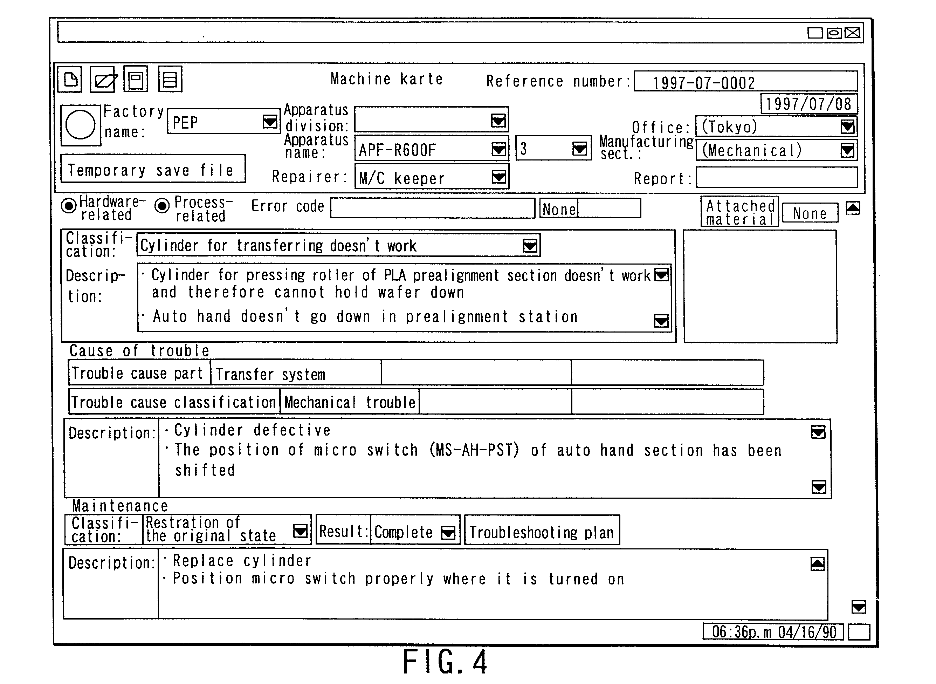

With the menu screen, the terminal 2 is prompted to select one of failure history, maintenance history, and remodeling history. On the menu screen of the terminal 2, any one of the histories is selected. The selected information of the history is transmitted to the server 1 (s33). The server 1 transmits information about business office, manufacturing section, process, apparatus division, apparatus name, and serial number to the terminal 2 (s34). The terminal 2 displays an idle situation registering screen on the basis of the received information. FIG. 4 shows an example of an idle situation registering screen when failure history is selected. After the screen is displayed, the terminal is prompted to select a unit whose situation is to be recorded. After the unit is selected, the terminal 2 requests for the server 1 the phenomenon of the idle situation, the phenomenon keyword to determine the cause, and the cause keyword (s35). Then, the terminal receives the keywords from the server (s36).

The user selects the classification that determines the reason why the apparatus in question became idle, as the category information on the screen shown in FIG. 4, from "the classifications" of failure phenomenon. More specifically, a keyword is selected from each of the transmitted phenomenon keyword and cause keyword. After these keywords are selected, the following data items are inputted or selected from the given data items: the apparatus division as the apparatus category information, the apparatus name as the apparatus identification information, the repairer as the person in charge of stopping an idle situation, the business office, the manufacturing section, the reporter, and other pieces of category information, including the duration of failure and the failure classification (hardware-/process-related classification). This selection enables failure phenomenon and failure cause to be written into the description column of failure phenomenon and failure cause.

Of the pieces of category information, apparatus name has a hierarchic structure lower in level than that of apparatus division. In the database 13, a data table that determines the relationship between the apparatus division and the apparatus name has been stored. Of course, similar data tables have been stored for pieces of category information that have other levels of priority.

Next, the user writes a description of the failure phenomenon and the failure cause with the terminal 2 and makes an information registration request to the server 1. In response to this, the terminal 2 transmits the written data items and keyword selected information to the server 1 (s37). The terminal 2 may transmit a supplementary information file, such as an image file or a text file to the server 1 in addition to writing a description of the failure phenomenon and failure cause. When the selected information of the keyword has been transmitted already, the terminal 2 may not transmit the selected information. The server 1 relates a phenomenon keyword and a cause keyword to each of the received data items, issues a data ID determined uniquely to each of the data items, and stores the resulting data in the database 13 (s38).

When the server 1 receives the supplementary information file, it compresses the file and stores the compressed file in the database 13. By a similar method, the descriptions of the maintenance history and remodeling history, together with the maintenance keyword and remodeling keyword, are registered in the database 13 of the server 1.

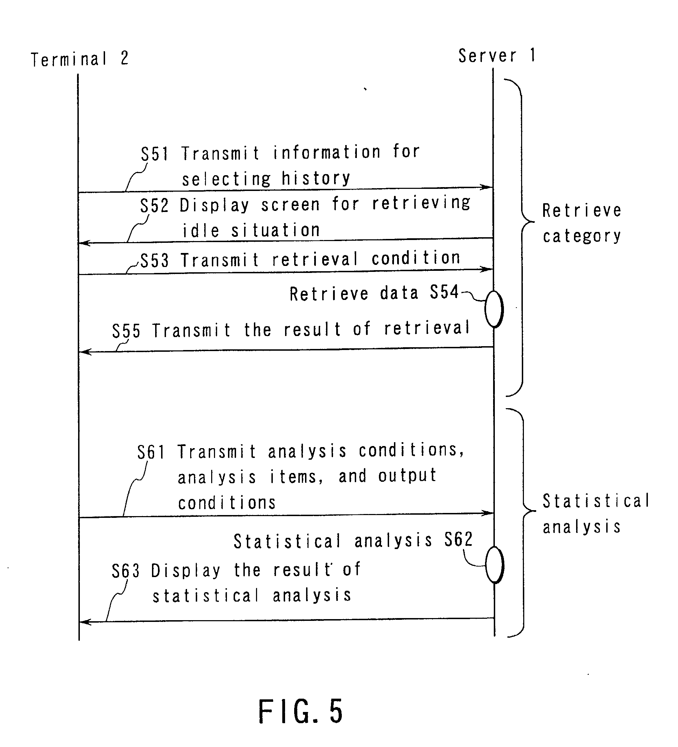

Next, an idle situation retrieving method will be explained by reference to a sequence diagram shown in FIG. 5.

As shown in FIG. 5, the terminal 2 displays a menu, thereby prompting the user to select the desired one to be retrieved from the choices of failure history retrieval, maintenance history retrieval, and remodeling history retrieval. The selected information about the history is transmitted to the server 1 (s51). The server 1 transmits information about the business office, manufacturing section, process, apparatus division, apparatus name, and serial number to the terminal 2 (s52). The terminal 2 displays a history retrieval screen on the basis of the received information.

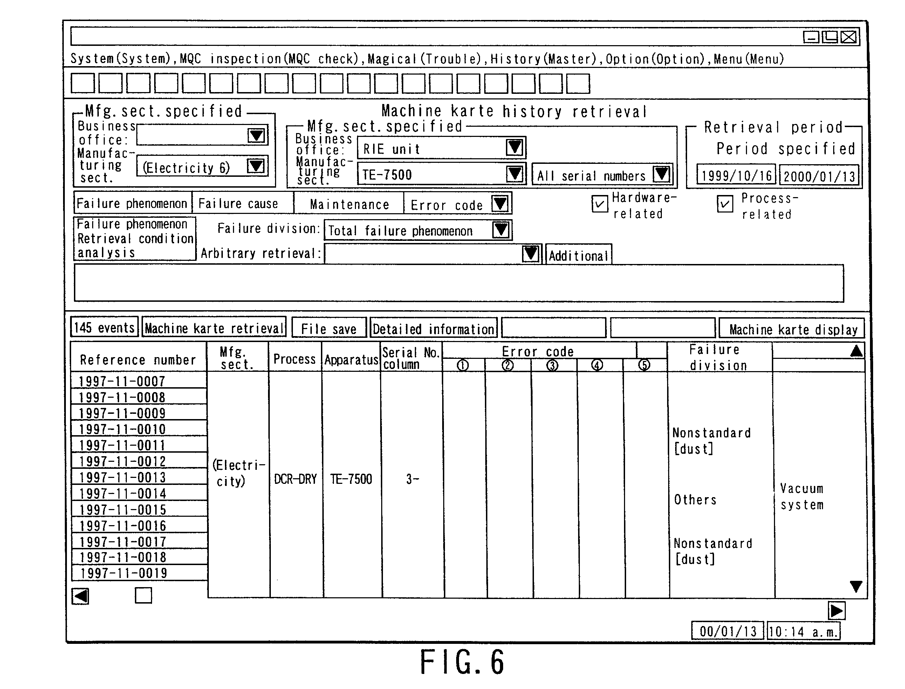

FIG. 6 shows an example of an idle situation retrieval screen when failure history is selected. The cause of the idle situation and the phenomenon keyword that determines the cause are transmitted together with the above screen to the terminal 2.

On the screen shown in FIG. 6, the user selects, for example, the manufacturing section, apparatus, failure occurrence time, failure phenomenon, failure-related site, failure cause, failure classification (hardware-/process-related classification), and inputs an arbitrary keyword. These retrieval conditions are transmitted to the server 1 (s53). On the basis of these retrieval conditions, the server 1 retrieves the data that meets the conditions from the database 13 as needed (s54), and displays the result of the retrieval on the screen of the terminal 2 (s55). FIG. 6 shows an example of listing the result of the retrieval using the following as the retrieval conditions: business office, manufacturing section, apparatus division, apparatus name, phenomenon division, and hardware/process-related specification.

Next, a method of acquiring an idle situation as the result of statistical analysis will be explained by reference to FIG. 5.

In retrieving the idle situation, to make a statistical analysis request to the server 1 with the terminal 2, the user inputs or selects the analysis conditions, including, for example, analysis period, business office, manufacturing office, and process, the analysis items, including, for example, failure down time, the number of failures, failure phenomenon, failure cause site, failure cause, and repairer, and the output condition, such as by period or by item. These inputted or selected analysis conditions and analysis items are transmitted to the server 1 (s61).

The server 1 extracts the data that meet the received analysis conditions and analysis items from the category information previously registered in the database 13. Furthermore, the server 1 accumulates the number of phenomena (e.g., the number of failures or the failure down time) for the analysis items using time or the number of events as a unit (s62). Specifically, the server 1 accumulates the number of pieces of information about the idle situation related to the category information, or the time to be calculated on the basis of the idle time information included in the category information. Then, the server 1 displays the result of analysis on the screen of the terminal 2 for each output condition according to the given analysis item (s63).

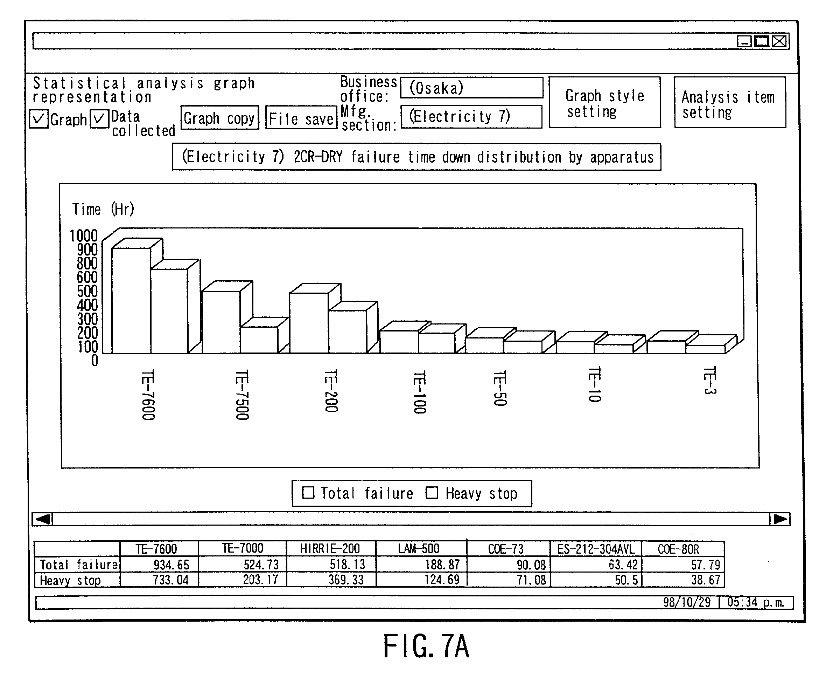

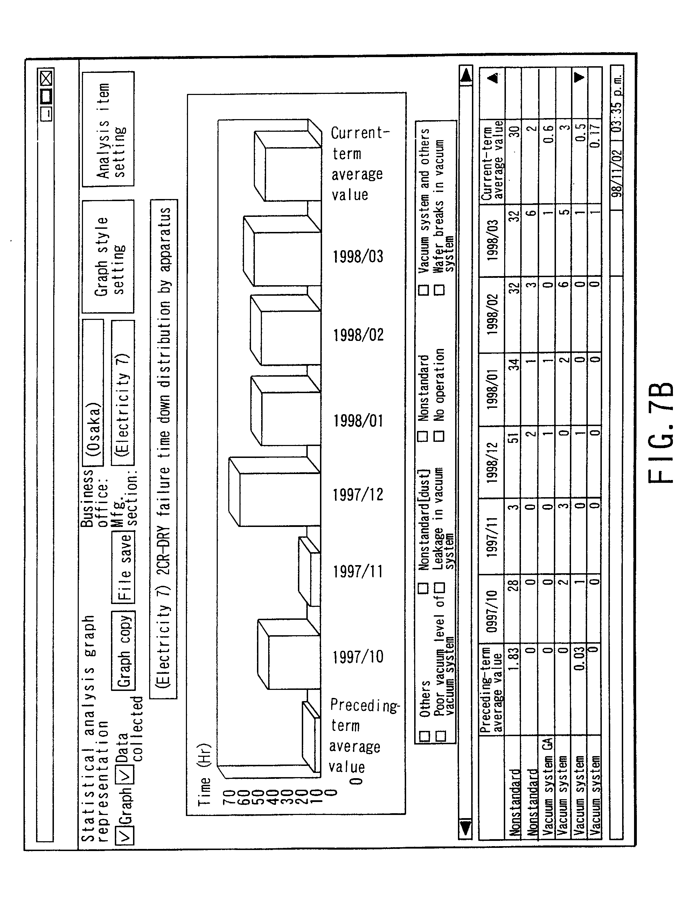

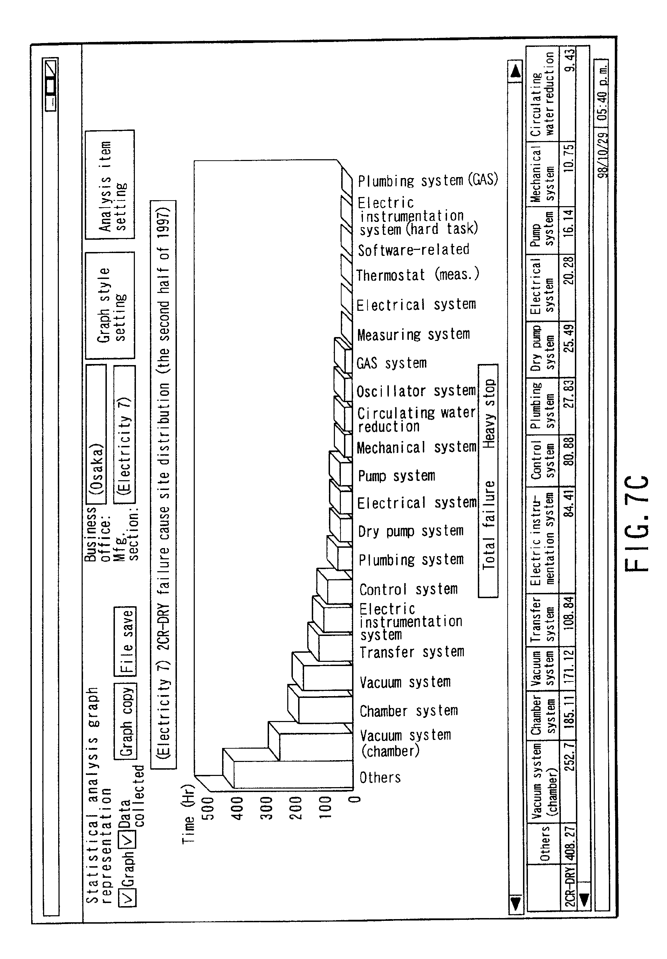

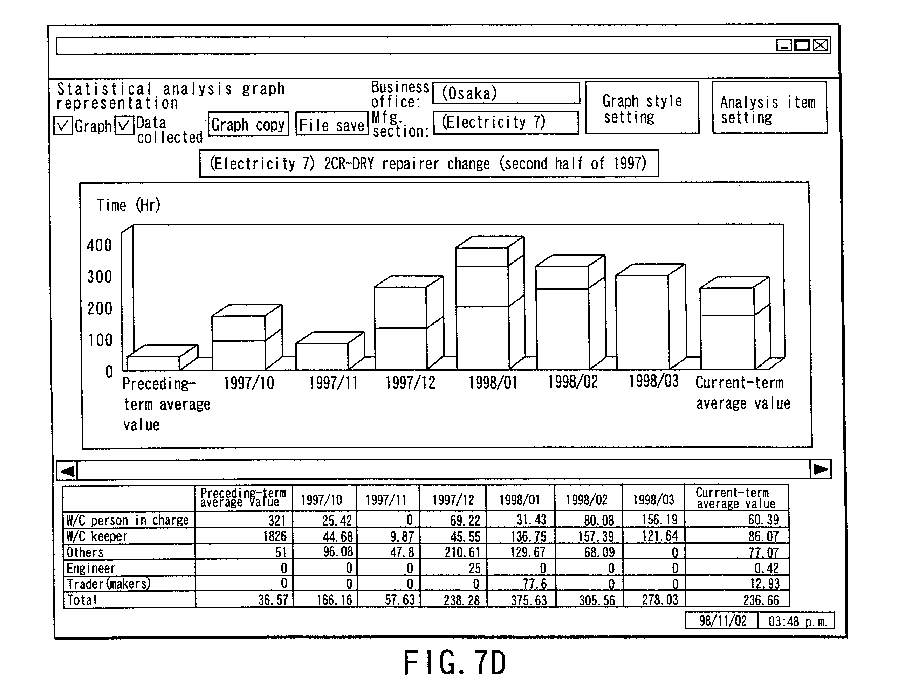

FIGS. 7A to 7D show examples of a result-of-analysis display screen. FIG. 7A shows an example of displaying the result of analysis when "failure down time" is used as an analysis item, "by apparatus" is used as an output condition, and "business office" and "manufacturing section" are used as analysis conditions. FIG. 7B shows an example of displaying the result of analysis when "failure phenomenon" is used as an analysis item, "by month (by idle state start time)" is used as an output condition, and "business office" and "manufacturing section" are used as analysis conditions. FIG. 7C shows an example of displaying the result of analysis when "failure cause site" is used as an analysis item, "by item" or "by cause site" is used as an output condition, and "business office," and "manufacturing section" are used as analysis conditions. FIG. 7D shows an example of displaying the result of analysis when "repairer" is used as an analysis item, "by period" is used as an output condition, and "business office," and "manufacturing section" are used as analysis conditions.

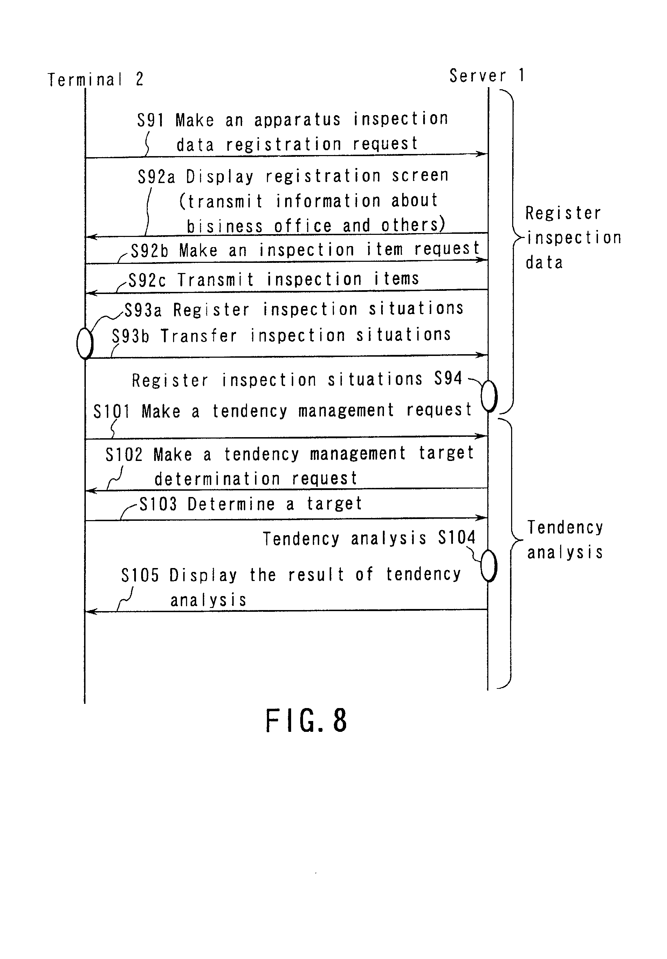

Next, an apparatus inspection data registering method will be explained by reference to a sequence diagram shown in FIG. 8.

The terminal 2 requires the server 1 to send information about the business office, manufacturing section, apparatus division, apparatus name, and serial number (s91). The server 1 transmits information about the business office, manufacturing section, apparatus division, apparatus name, and serial number to the terminal 2 (s92a). After selecting an apparatus whose data is to be registered, or a target apparatus, the terminal 2 requests the server 1 to transmit the inspection items of the target apparatus and its past data (s92b). The server 1 transfers the work items of the target apparatus, its standard values, its past data, and the working date and time to the terminal 2 (s92C). After receiving the data, the terminal 2 displays an inspection data input screen and prompts the user to input each inspection situation. When the apparatus inspector inputs each inspection situation from the terminal 2, the inputted inspection situations are registered in a memory device (not shown) temporarily (s93a) and transferred to the server (s93b). The server 1 stores each received inspection situation in the database 13 (s94). Each inspection situation is determined in values for each inspection item of the apparatus that the apparatus inspector is supposed to check.

When the inspection data registering method has been carried out more than once at different times and the inspection data items for the different times have been registered, the user can request the server 1 to manage the tendency on the basis of a statistical analysis based on the inspection data items for the different times.

When receiving the tendency management request (s101), the server 1 requests the terminal 2 to determine an object whose tendency is to be managed, such as an apparatus whose tendency is to be managed, as the necessary data for a tendency managing process (s102). After the terminal 2 determines the apparatus whose tendency is to be managed (s103), the server 1 extracts the past inspection situation about the apparatus from the database 13. Then, for example, the server 1 makes the following tendency analyses (s104).

In a first tendency analysis, it is determined whether any one of the past 15 inspection situation values obtained for the same inspection item at different times has a value that deviates 3σ or more from the average value (hereinafter, just referred to as the center value) of the inspection situation values for the inspection item in apparatuses including at least another apparatus of the same type, or from a predetermined standard value. If any one of the past 15 inspection situation values deviates 3 σ or more from the average value or the predetermined value, the result of the first analysis has shown a warning. If not, it is determined that the past 15 inspection situation values are normal. Here, σ indicates a specific value range. Furthermore, it is determined whether each inspection situation value has exceeded a predetermined management limit. If the predetermined management limit has been exceeded, the result has shown a warning. If not, it is determined that the inspection situation value is normal.

In a second tendency analysis, it is determined whether nine consecutive ones of the 15 inspection situation values have exceeded the center value or are smaller than the center value. If they have exceeded the center value or are smaller than the center value, the result has shown a warning. If they neither have exceeded the center value nor are smaller than the center value, it is determined that they are normal.

In a third tendency analysis, it is determined whether seven consecutive ones of the 15 inspection situation values rise or fall continuously. If they rise or fall, the result has shown a warning. If not, it is determined that they are normal.

In a fourth tendency analysis, it is determined whether fourteenth consecutive ones of the 15 inspection situation values rise and fall alternately. If they rise and fall alternately, the result has shown a warning. If not, it is determined that they are normal.

In a fifth tendency analysis, it is determined whether two of three consecutive inspection values are more than 2 σ larger than the center value or equal to or less than the center value. If they are more than 2σ larger than the center value or equal to or less than the center value, the result has shown a warning. If not, it is determined that they are normal.

In a sixth tendency analysis, it is determined whether four of five consecutive inspection values are more than 1σ larger than the center value or equal to or less than the center value. If they are more than 1 σ larger than the center value or equal to or less than the center value, the result has shown a warning. If not, it is determined that they are normal.

In a seventh tendency analysis, it is determined whether all the 15 inspection situation values are within the range of ±1σ from the center value. If they are within the range, the result has shown a warning. If not, it is determined that they are normal.

In an eighth tendency analysis, it is determined whether eight inspection values have exceeded the range of ±1σ from the center value. If they have exceeded the range, the result has shown a warning. If not, it is determined that they are normal.

The server 1 makes the above tendency analyses and displays the results on the terminal 2 (s105). If there is any inspection situation value that meets the conditions for a warning, the server 1 displays the result of the analysis on the terminal 2 and gives a warning. Preferably, the server 1 retrieves a method of dealing with the warning from the database 13 and displays it on the terminal 2. The apparatus inspector using the terminal 2 checks the apparatus on the basis of the displayed description and do repair work if adjustment or the like is necessary.

The result of the tendency analysis may be displayed in such a manner that, for example, the inspection situation corresponding to a warning is displayed in red and the rest are shown in other colors, or that the inspection situation deserving of a warning is notified in sound or the like.

Next, an inspection management method will be explained.

In the database 13 of the server 1, an inspection schedule for each work item, an inspection time, and an inspector have been registered for each of the apparatuses to be managed. The server 1 retrieves the inspection schedule for the day of the start-up or the preceding day from the database 13 as needed and acquires all the work items, standard, and the data about the preceding day. When data about the preceding day has not been registered, the server 1 transmits a warning mail to notify the work undone to the terminal 2 of a predetermined worker. The predetermined worker has to register the inspection data input terminal 2 in advance.

If the acquired work item has not been executed on that day, a work schedule notice is transferred to the predetermined worker by mail.

When the tendency analysis has been made and there is an inspection situation deserving of a warning, or when there is a nonstandard inspection situation, a warning mail is transferred to the manager. The manager may be the predetermined worker or another person. In the case of another person, it is necessary to register the person as the manager.

When the transfer of these mails has been completed for all the work items, the inspection managing process of the server 1 is completed.

As explained above, the first embodiment enables the history of idle situations to be managed but also the daily inspection data to be managed and subjected to a tendency analysis. This improves the productivity and quality of the apparatus. A plurality of terminals can manage systematically the idle situation and inspection data from a plurality of apparatuses installed in a distributed manner. By registering each history and inspection data by category, a statistical analysis of the data can be made by category, which enable the data obtained from a plurality of apparatuses to be used as statistical information. As a result, the productivity and quality of the apparatus are improved further. Since a plurality of pieces of category information are made hierarchic in the form of a relational database structure, a detailed result of statistical analysis can be obtained.

### (Second Embodiment)

A second embodiment of the present invention relates to a modification of the first embodiment. In the second embodiment, the terminal 2 is a mobile terminal which transmits and receives data to and from the server 1 by radio. The terminal 2 may be an ordinary fixed terminal.

In each mobile terminal 2 in the second embodiment, an inspector in charge for inspection items has been registered. The number of registered inspectors may be one or more. Each inspector in charge is allocated a person-in-charge ID and a password in advance. An inspection schedule is stored in the database 13 in such a manner that it is related to the inspector in charge. Therefore, the inspection schedule is constructed by relating at least the person in charge, inspection items, and inspection times to one another.

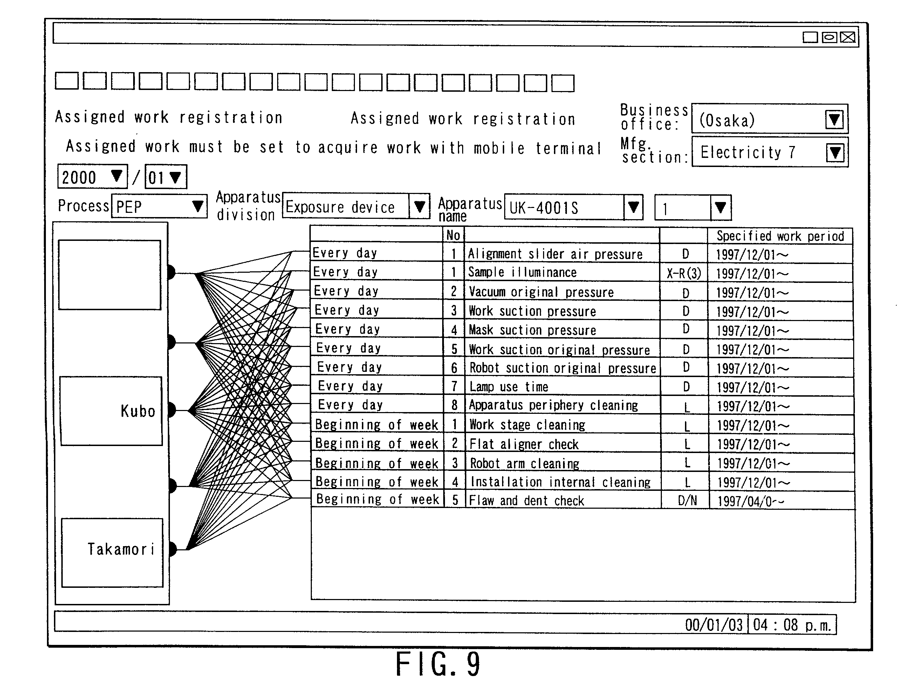

The inspector in charge and inspection items can be related to one another on, for example, a screen shown in FIG. 9. As shown in FIG. 9, the person in charge (user name), inspection items (work), and inspection times can be related to one another on the screen of the mobile terminal 2. More specifically, the work is related to the name of the user who does the work. After such a relation is established, when the user make a registration request to the server 1, the inspector in charge, inspection items, and inspection times which have been related to one another are transmitted to the server 1 and stored in the database 13. The relating method may be changed according to the request of the terminal 2. For instance, the inspection items allocated to the inspector in charge may be allocated to each apparatus. A first inspection item common to a plurality of apparatuses may be allocated to a first person in charge. Similarly, a second inspection item common to a plurality of apparatuses may be allocated to a second person in charge. That is, the inspection items may be allocated on an apparatus basis or on the basis of the commonality of the inspection items.

When the person in charge using the terminal 2 requests access to the database 13 in which the data has been registered as described above, the server 1 requests the user to input the person-in-charge ID and password. After the person in charge inputs the person-in-charge ID and password, the server 1 permits access on the basis of the person-in-charge ID and password and displays only the inspection items related to the person-in-charge ID on the screen of the mobile terminal 2. Therefore, only the inspection items that the other persons in charge must execute can be checked.

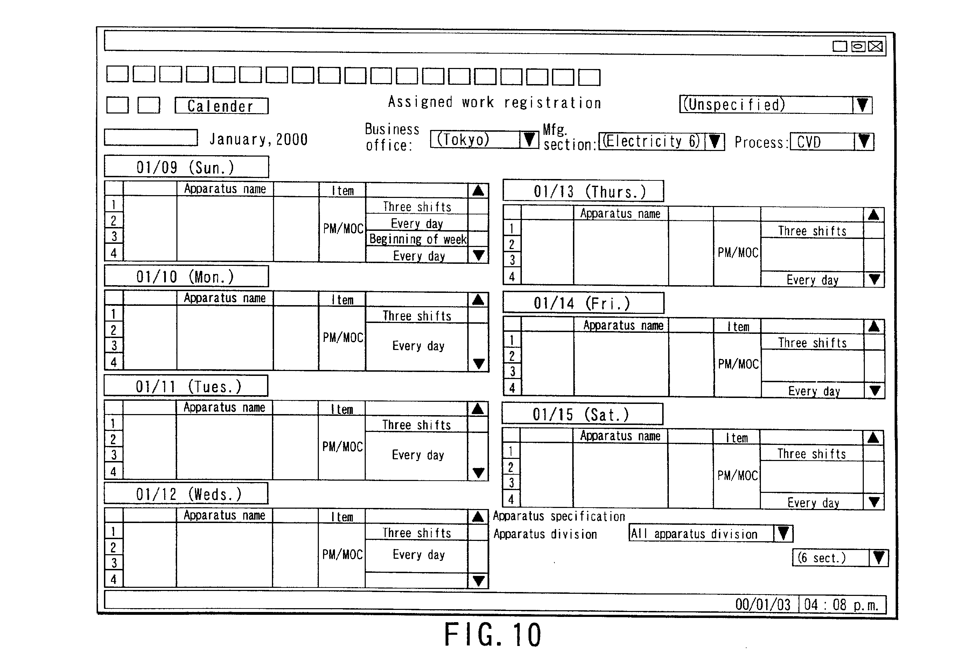

Furthermore, when the inspection times are related to the individual inspection items, the server 1 can search the database 13 at the request of the terminal 2 and display, for example, a work schedule of FIG. 10 on the screen of the terminal 2. In addition, when a going-around rule, such as the sequence of inspection work, is related to the each inspection item, the database 13 enables the inspection items to be presented on the basis of the going-around rule. This reduces the omission of inspection items by the inspector in charge and improves the efficiency of inspection work.

Moreover, the inspector can do inspection work distributed in a wide area of, for example, a factory, while carrying the terminal 2 and inputting each inspection situation value from input device, such as a touch panel. Therefore, this eliminates the work of inputting again the data recorded on, for example, sheets of paper.

### (Third Embodiment)

A third embodiment of the present invention provides a detailed configuration of the database 13 shown in the first or second embodiment. The configuration of the third embodiment, excluding the database 13, is the same as that of the first or second embodiment. Thus, a detailed explanation of the third embodiment will be omitted.

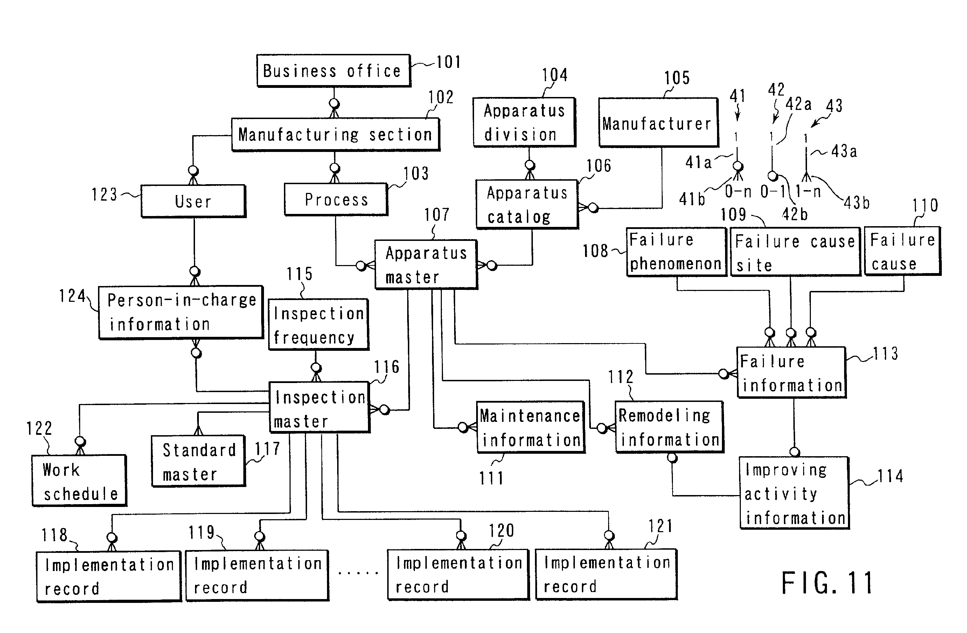

The database 13 has a relational database structure. FIG. 11 shows an example of the relational database structure stored in the database 13. Each block in FIG. 11 represents a data table. The name in each block in FIG. 11 is the name of the data table. Each data table uses its data table name as one of the data items. The data table name is related to other detailed data items, thereby forming a data table.

The relationship between the blocks in FIG. 11 are represented by three types of relationship that relate the blocks. The three types of relationship include a first relationship 41 to a third relationship 43.

The first relationship 41 is defined by a branched side 41a and an unbranched side 41b. The relationship between the branched side 41a and the unbranched side 41b is in a 1:(0-n) correspondence (n denotes the plural number). Here, "a record of a first table has a first relationship 41 to a record of a second table" means that the relationship between the record of the first table and the record of the second table is in a 1:(0-n) correspondence. In this case, the first table corresponds to the branched side 41a and the second table corresponds to the unbranched side 41b.

The second relationship 42 is defined by a branched side 42a and an unbranched side 42b. The relationship between the branched side 42a and the unbranched side 42b is in a 1:0 or 1:1 correspondence. Here, "a record of a first table has a second relationship 42 to a record of a second table" means that the relationship between the record of the first table and the record of the second table is 1:0 or 1:1 correspondence. In this case, the first table corresponds to the branched side 42a and the second table corresponds to the unbranched side 42b.

The third relationship 43 is defined by a branched side 43a and an unbranched side 43b. The relationship between the branched side 43a and the unbranched side 43b is in a 1:(1-n) correspondence (n denotes the plural number). Here, "a record of a first table has a third relationship 43 to a record of a second table" means that the relationship between the record of the first table and the record of the second table is in a 1:(1-n) correspondence. In this case, the first table corresponds to the branched side 43a and the second table corresponds to the unbranched side 43b.

According to these first relationship 41 to third relationship 43, a plurality of data tables are stored in such a manner that they have a specific relationship between them as the relational database structure.

A record of a business office table 101 has the first relationship 41 to a record of a manufacturing section table 102. The record of the manufacturing section table 102 has the first relationship 41 to a record of a user table 123. The record of the manufacturing section table 102 has the first relationship 41 to a record of a process table 103. The record of the process table 103 has the first relationship 41 to a record of an apparatus master table 107. The record of the user table 123 has the first relationship 41 to a record of a person-in-charge information table 124. The record of the apparatus master table 107 has the first relationship 41 to a record of a maintenance information table 111. The record of the apparatus master table 107 has the first relationship 41 to a record of a remodeling information table 112. The record of the apparatus master table 107 has the first relationship 41 to a record of a failure information table 113. A record of a failure phenomenon table 108, a record of a failure cause site table 109, and a record of a failure cause table 110 each have the first relationship 41 to the record of failure information table 113. The record of failure information table 113 has the second relationship 42 to a record of an improving activity information table 114. The record of the improving activity information table 114 has the second relationship 42 to the record of remodeling information table 112. The record of the apparatus master table 107 has the first relationship 41 to a record of an inspection master table 116. A record of an inspection frequency table 115 has the first relationship 41 to the record of the inspection master table 116. The record of the inspection master table 116 has the first relationship 41 to records of implementation record tables 118 to 121, a work schedule table 122, and the person-in-charge information table 124. The record of the inspection master table 116 has the third relationship 43 to a record of a standard master table 117. Records of an apparatus division table 104 and an manufacturer table 105 have the first relationship 41 to a record of an apparatus catalog table 106. The record of the apparatus catalog table 106 has the first relationship 41 to the record of the apparatus master table 107.

The aforementioned 1:1 relationship means that the ratio of the number of records of one data table to the number of records of another data table is 1:1. The 1:0 relationship means that the ratio of the number of records of one data table to the number of records of another data table is 1:0.

Furthermore, the 1:n relationship means that the ratio of the number of records of one data table to the number of records of another data table is 1:n. For example, the record of the failure cause table 110 has the first relationship 41 to the record of the failure information table 113. In this case, a plurality of records of the failure information tables 113 correspond to a record of the failure cause table 110.

When a plurality of records of data items are caused to correspond to a data item represented by the data table name, a plurality of records of the data table are allocated. When one data item is caused to correspond to the data item represented by the data table name, one record of the data table is allocated. For example, the relationship between the record of the business office table 101 and the record of the manufacturing section table 102 will be explained. In the record of the manufacturing section table 102, the data item represented by its data table name "manufacturing section table" is "manufacturing section."

When there are a plurality of manufacturing sections to be managed, each manufacturing section should be made identifiable. Therefore, the records of the manufacturing section table 102 are provided for each manufacturing section. Consequently, the number of records of the manufacturing section table 102 is plural. When there is a single manufacturing section to be managed, only one record of the manufacturing section table 102 has to be provided.

Idle situations are stored in the database 13 in such a manner that they are classified into the maintenance information table 111, remodeling information table 112, and failure information table 113. The record of the apparatus master table 107 for identifying apparatuses has the first relationship 41 to the records of the tables 111 to 113 that show idle situations. As a result, the relationship between the record of the apparatus master table 107 and the record of each of the tables 111 to 113 is in a 1:n correspondence. This relationship enables information about any apparatus or operating situation to be extracted from the database 13 easily.

The record of the failure information table 113 is related to the record of the failure phenomenon table 108, the record of the failure cause site table 109, and the record of the failure cause table 110, which are categories for classifying failure information. Specifically, the records of the tables 108 to 110 have the first relationship 41 to the record of the failure information table 113. This relationship makes it possible to extract any piece of failure information or a piece of failure information related to a failure cause site or a failure cause from the database 13 easily. Thus, when a failure has occurred, the past failure information related to the same failure cause can be extracted to determine the cause of the failure or find a measure to cope with the failure. As a result, the time required to recover from the failure can be shortened. Furthermore, it is also easy to determine the failure phenomenon or failure cause site or calculate the down time for each failure cause or the number of failures, which helps analyze the failure.

The data table structure shown in FIG. 11 is stored in the database 13 of the first embodiment or second embodiment. This produces the following effect.

The maintenance items are stored in the record of the maintenance master table 116 in such a manner that they are related to the maintenance master. The record of the maintenance master table 116 is stored in the database 13 in such a manner that it is related to the record of the apparatus master 107 for identifying apparatuses. On the other hand, at least one piece of management information, such as a standard or a tendency determining condition, is stored in the record of the standard master table 117 in such a manner that it is related to the standard master. The record of the maintenance item master table 116 has the third relationship 43 to the record of the standard master table 117. An operation period is stored in the record of the standard master table 117 in such a manner that it is related to the standard master. When the management information is changed, a new piece of management information and/or operation period are added. This makes it possible to manage the apparatuses and the history of operation.

The maintenance situation of each maintenance item is related to the implementation record in the record of any one of the implementation record tables 118 to 121. It is determined which record of the tables 118 to 121 the implementation record and maintenance situation are to be written into. The records of the implementation record tables 118 to 121 are stored in the database 13 in such a manner that they are related to the record of the maintenance master 116. This enables the maintenance situations or the like to be analyzed by category.

The work schedule for each maintenance item is related to record of the work schedule table 122. The record of the work schedule table 122 is related to the record of the maintenance master table 116. The implementation record for the record of the work schedule table 122 is retrieved from the record of any one of the implementation tables 118 to 121. This enables unimplemented maintenance items to be extracted.

Information about the operator who operates the apparatus is related to the user of the record of the user table 123. The record of the user table 123 is related to the record of the manufacturing section table 102. The inspection item that the operator takes charge of is related to the person-in-charge information in the person-in-charge information table 124. This makes it possible to extract only the inspection items to which the operator is related. That is, it is easy to output only the necessary inspection instructions to any operator. In addition, it is also possible to extract only the operators related to the maintenance item. As a result, various warnings about the maintenance item can be given easily to the person in charge of maintenance.

The above-described effect is only a part of the examples.

The present invention is not limited to the above embodiments. For instance, while the system has been applied to the network configuration of FIG. 1, it may be applied without using a network, provided that, for example, the necessary data and program for management are recorded in a stand-alone computer. The terminal 2 and server 1 may be connected to each other by wire or by wireless.

Furthermore, while the programs for executing the functions of the embodiments have been installed in the processor 12 and the functions of the embodiments have been executed by the programs, a recording medium reading unit (not shown) in the server 1 may read the programs from a program product which assigns a computer system a command to manage an apparatus, comprising: a computer-readable recording medium and one or more program code recorded in the recording medium and assigning the computer system a command of various processing. The programs have been recorded in the computer-readable recording medium and cause the processor 12 to execute various functions. In addition, the programs for executing the functions of the embodiments may be installed in the terminal 2 and the functions of the embodiments may be executed by the programs. In this case, the programs search the database 13 of the server 1.

While the server 1 has displayed the output data on the screen of the terminal 2, it may notify the output data in sound or the like.

As has been described in detail, with the above embodiments, the quality and productivity of the apparatus can be improved.

## Claims

1. An apparatus management method **characterized by** comprising:
prompting the input of category information for classifying the idle situations of idle apparatuses;
prompting the input of idleness information for specifying the idle situations of said idle apparatuses; and
storing said idleness information in a memory device (13) in which the idleness information is related to said category information.

2. The apparatus management method according to claim 1, **characterized in that** said idleness information is permitted to be stored in said memory device (13) in response to the input of said category information.

3. The apparatus management method according to claim 1, **characterized in that** each of said idle situations is at lease one of the failure of, maintenance of, and remodeling of the apparatus.

4. The apparatus management method according to claim 1, **characterized in that** the category information stored in said memory device (13) comprises a plurality of information, the plurality of the category information including a plurality of levels of hierarchy in which the different levels of hierarchy are related to one another.

5. The apparatus management method according to claim 1, **characterized in that** when said category information is inputted, the input of apparatus identification information for identifying an apparatus from another apparatus is prompted.

6. The apparatus management method according to claim 1, **characterized in that**:
said memory device (13) stores a maintenance information table (111) to manage maintenance information, a remodeling information table (112) into which remodeling information is recorded, and a failure information table (113) into which failure information is recorded, wherein each of the maintenance information table (111), the remodeling information table (112), and the failure information table (113) is related to an apparatus master table (107) which identifies an apparatus from another apparatus; and
the idleness information is classified into said maintenance information table (111), said remodeling information table (112), and said failure information table (113).

7. The apparatus management method according to claim 1, **characterized in that**:
said memory device (13) stores a failure phenomenon data table (108) into which failure phenomena are recorded, a failure cause site data table (109) into which failure cause sites are recorded, and a failure cause data table (110) into which failure causes are recorded, the failure phenomenon data table (108), wherein each of the failure phenomenon data table (108), the failure cause site data table (109), and the failure cause data table (110) is related to an failure information table (113) into which failure information is recorded; and
the idleness information is classified into the failure phenomenon data table (108), the failure cause site data table (109), and the failure cause data table (110).

8. An apparatus management method **characterized by** comprising:
prompting the input of at least one of category information for classifying the idle situations of idle apparatuses and idleness information of the idle apparatuses;
extracting related information associated with inputted information from a memory device (13) in which the category information for classifying the idle situations of the idle apparatuses and the idleness information of the idle apparatuses is stored in advance; and
displaying said related information.

9. The apparatus management method according to claim 8, **characterized in that** the category information stored in said memory device (13) comprises a plurality of information, the plurality of the category information including a plurality of levels of hierarchy in which the different levels of hierarchy are related to one another.

10. The apparatus management method according to claim 8, **characterized by** further comprising:
making a statistical analysis on the basis of said related information and calculating the result of statistical analysis; and
displaying the result of said statistical analysis.

11. The apparatus management method according to claim 10, **characterized in that**:
the input of apparatus category information representing the categories of said apparatuses is prompted when said category information is inputted; and
a statistical analysis of at least one of the idle time and the number of idle events is calculated as the result of statistical analysis for each piece of said apparatus category information when the result of said statistical analysis is calculated.

12. The apparatus management method according to claim 10, **characterized in that**:
said category information includes at least one of failure phenomenon information and failure cause information; and
at least one of the failure time and the number of failures is calculated as the result of statistical analysis for each of said failure phenomenon and/or failure cause when the result of said statistical analysis is calculated.

13. The apparatus management method according to claim 10, **characterized in that**:
apparatus identification information for identifying an apparatus from another apparatus and stoppers in charge who stop the idle states of the apparatuses in relation to the apparatus identification information are stored in said memory device (13) in which the apparatus identification information and the stoppers in charge are related to said idleness information; and
the relation between said stoppers in charge and other category information is calculated for each of said stoppers in charge when the result of said statistical analysis is calculated.

14. An apparatus management method **characterized by** comprising:
displaying an inspection item display screen including the inspection items of an apparatus to prompt the input of inspection situation values for determining the inspection situation of each inspection item, the inspection situation specified in values;
storing inputted inspection situation values in a memory device (13);
making a statistical analysis on the basis of said inspection situation values; and
displaying the result of said statistical analysis.

15. The apparatus management method according to claim 14, **characterized in that** said statistical analysis calculates the tendency of said inspection situation values to change at a plurality of inspection times for the same inspection item.

16. The apparatus management method according to claim 15, **characterized in that** the tendency of said inspection situation values to change is expressed by at least one of variations in said inspection situation value for each inspection time, the degree of rise and fall, and the continuity of variation.

17. The apparatus management method according to claim 14, **characterized by** further comprising:
determining whether the result of said statistical analysis meets a specific condition, after calculating the result of said statistical analysis, and wherein the displaying the result of said statistical analysis includes displaying a warning representation when it is determined that the result of said statistical analysis does not meet said specific condition.

18. The apparatus management method according to claim 14, **characterized in that** said inspection items are stored in said memory device (13) in which each of the inspection items is related to an inspector in charge in advance, and said apparatus management method further comprising:
when said inspection situation value of an apparatus stored in said memory device (13) has not been inputted after an elapse of a specific length of time, giving a warning that prompts an inspector in charge of the inspection item to input the inspection situation value.

19. The apparatus management method according to claim 14, **characterized in that**:
said memory device (13) stores an apparatus master table (107) for identifying apparatuses, a maintenance master table (116) into which maintenance items are recorded, and a standard master table (117) into which maintenance work standards are recorded, wherein said apparatus master table (117) is related to said maintenance master table (116) and said maintenance master table (116) is related to said standard master table (117);
at least one of apparatus identification information for identifying apparatuses, inspection items, and the maintenance work standard is prompted when the input of inspection situation values is prompted; and
at least one of apparatus identification information for identifying apparatuses, inspection items, and the maintenance work standard is stored in said memory device (13) when the inputted inspection situation values is stored in the memory device (13).

20. The apparatus management method according to claim 14, **characterized in that**:
said memory device (13) stores implementation record tables (118 to 121) into which implementation records are recorded and an inspection master table (116) into which inspection items are recorded, wherein each of said implementation record tables (118 to 121) is related to said inspection master table (116) for each category;
the input of said maintenance situation value is prompted together with the input of the implementation record; and
implementation records are stored by category, wherein the implementation records are related to said maintenance situation values.

21. The apparatus management method according to claim 14, **characterized in that**:
said memory device (13) stores an implementation record table (118 to 121) into which implementation records are recorded, an inspection master table (116) into which inspection items are recorded, and a work schedule table (122) into which work schedules are recorded, wherein each of said implementation record tables (118 to 121) is related to said inspection master table (116) by category and said work schedule table (122) is related to said inspection master table (116);
the input of said maintenance situation value is prompted together with the input of at least one of the inspection items and the work schedule; and
at least one of inputted inspection items and inputted work schedule is stored, wherein at least one of the inputted inspection items and the inputted work schedule is related to said maintenance situation values.

22. The apparatus management method according to claim 14, **characterized in that**:
said memory device (13) stores a manufacturing section table (102) for identifying divisions that manufacture by using apparatuses, a user table (123) for identifying operators who use apparatuses, and a person-in-charge information table (124) into which inspection items that operators take charge of are recorded, wherein said manufacturing section table (102) is related to said user table (123) and said person-in-charge information table (124) is related to said user table (123);
the input of said maintenance situation value is prompted together with the input of at least one of operator identification information for identifying operators and said inspection items; and
at least one of inputted operator identification information and inputted inspection items is stored, wherein at least one of the inputted operator identification information and the inputted inspection items is related to said maintenance situation values.

23. An apparatus management system **characterized by** comprising:
a memory device (13) configured to store category information for classifying the idle situations of idle apparatuses and idleness information for specifying the idle situations of the idle apparatuses, wherein the category information and the idleness information are related to one another;
a first device (11) configured to present a plurality of said category information to prompt to select at least one of the category information; and
a second device (11) configured to permit said idleness information to be stored into said memory device (13) in response to the selection of said category information, wherein said idleness information stored in said memory device (13) is related to the selected category information.

24. The apparatus management system according to claim 23, **characterized by** further comprising:
a third device (11) configured to request the input of a category information or a keyword used for retrieval in response to a request for the retrieval of the idleness information; and
a fourth device (11) configured to read out said idleness information related to said category information or said idleness information including said keyword from said memory device (13).

25. The apparatus management system according to claim 24, **characterized by** further comprising:
a fifth device (11) configured to make a statistical analysis on the basis of said category information and calculating the result of statistical analysis, wherein said fourth device (11) outputs the result of said statistical analysis.

26. An apparatus management system **characterized by** comprising:
a memory device (13) configured to store the inspection items of an apparatus and inspection situation values which determine the inspection situations of the inspection items specified in values, wherein the inspection items and the inspection situation values are related to one another;
a first device (11) configured to make a statistical analysis on the basis of each of said inspection situation values at a plurality of times for each of said inspection items; and
a second device (11) configured to output the result of said statistical analysis.

27. The apparatus management system according to claim 26, **characterized in that** said inspection items are related to inspectors in charge, and said apparatus management system further comprising:
a third device (12) configured to give a warning that prompts an inspector in charge of the inspection item to input the inspection situation value, when said inspection situation value of an apparatus stored in said memory device (13) has not been inputted after an elapse of a specific length of time.

28. An apparatus management program product which assigns a computer system a command to manage an apparatus, **characterized by** comprising:
a recording medium;
a first program code recorded in said recording medium and assigning said computer system a command to store category information for classifying the idle situations of idle apparatuses and idleness information for specifying the idle situations of the idle apparatus, wherein the category information and the idleness information are related to one another;
a second program code recorded in said recording medium and assigning said computer system a command to present a plurality of said category information to prompt the selection of at least one of the category information;
a third program code recorded in said recording medium and assigning said computer system a command to permit said idleness information to be stored in the memory device (13) in response to the selection of said category information; and
a fourth program code recorded in said recording medium and assigning said computer system a command to store said idleness information in said memory device (13), wherein the idleness information is related to the selected category information.

29. An apparatus management program product which assigns a computer system a command to manage an apparatus, **characterized by** comprising:
a recording medium;
a first program code recorded in said recording medium and assigning said computer system a command to store the inspection items of an apparatus and inspection situation values which determine the inspection situations of the inspection items specified in values, wherein the inspection items and the inspection situation values are related to one another;
a second program code recorded in said recording medium and assigning said computer system a command to make a statistical analysis on the basis of each of said inspection situation values at a plurality of times for each of said inspection items; and
a third program code recorded in said recording medium and assigning said computer system a command to output the result of said statistical analysis.
